# DEMANDE DE BREVET EUROPEEN

(11) **EP 3 588 401 A1**
(43) Date de publication de la demande: **01.01.2020**
(21) Numéro de dépôt: 19182310.3
(22) Date de dépôt: 25.06.2019
(51) Int. Cl.: G06Q 10/04, B66F 9/06, G06Q 10/08, G06Q 50/28

(54) **SYSTEME POUR LA GESTION DE STOCKS DE PRODUITS EN PILE DANS UNE ZONE**

(30) Priorité: 27.06.2018 FR 1800661
(71) Demandeur: Utronix, 51500 Sermiers (FR)
(72) Inventeur: VITRY, Grégoire, 51500 SERMIERS (FR)
(74) Mandataire: Fidal Innovation

(57) **Abrégé**

Le système de gestion de stocks de produits en pile comprend des étiquettes d'identification (14) qui équipent un produit (100) et stockent un identifiant ; un boîtier électronique (21) qui équie un chariot élévateur (5), et comprend un système de lecture (24) qui lit une étiquette d'identification (14) proche ; un système opérateur (28), qui équipe le chariot élévateur (5), et comprend un module de communication (30) avec le boîtier électronique (21) et avec un serveur distant (32) ; le serveur distant (32) comprend une mémoire (36) qui stocke une cartographie tridimensionnelle des produits dans la zone - la cartographie tridimensionnelle comprend un identifiant associé au produit en un emplacement et des coordonnées tridimensionnelles associées, le serveur distant (32) reçoit des informations partielles relatives à un emplacement destination de stockage du produit, et comprend un processeur (34) qui détermine un emplacement destination de stockage d'un produit à stocker à partir au moins des informations partielles et de la cartographie tridimensionnelle, et transmet au système opérateur (28), l'emplacement destination de stockage.

## Description

### DOMAINE DE L'INVENTION

La présente invention se rapporte aux systèmes pour la gestion de stocks de produits en pile dans une zone.

### ARRIERE-PLAN TECHNOLOGIQUE

De nombreux systèmes pour la gestion de stocks de produits sont connus. On peut par exemple penser aux systèmes entièrement automatisés utilisés dans les entrepôts, pour stocker/déstocker des produits. Ces systèmes utilisent des technologies d'identification utilisant des identifiants des produits stockés. Parfois, les produits sont de petit volume, et sont stockés sur des palettes, qui ont-elles-mêmes des identifiants. Les palettes sont souvent stockées sur des étagères, qui ont-elles-mêmes leur identifiant. Les systèmes permettant de distinguer ces nombreux identifiants sont assez complexes.

Ces solutions technologiques peuvent être facilement utilisées dans de nouveaux entrepôts, qui sont conçus spécialement pour leur mise en oeuvre, mais elles sont difficiles à utiliser dans des entrepôts existants, où des méthodes et des outils de travail sont déjà en place. US 2014/277,691 adresse justement ce problème, et tente de faire cohabiter des chariots entièrement automatisés avec des chariots conduits par des humains. Que ce soit aux chariots entièrement automatisés ou aux chariots conduits par des humains, un serveur central, soumis à une requête pour un produit en particulier, construit un plan de route pour le chariot entre un emplacement de prise du produit et un emplacement de dépose du produit. Le serveur central soumet le plan de route au chariot automatique, qui l'applique, ou au chariot conduit par un humain, qui conduit pour suivre ce plan de route. Toutefois, ce système peut marcher pour des chariots entièrement automatisés. Toutefois, quand il s'agit de chariots avec des conducteurs humains, ce document les considère comme des automates, et ne prend pas en compte le facteur humain. Ainsi, le système n'est pas prévu pour des erreurs humaines.

Dans le domaine de la pomme de terre, les pommes de terre sont récoltées en terre et acheminées en vrac dans des centres de triage et de conditionnement où elles sont stockées dans des cuves appelées « palox ». Un palox de pommes de terre va typiquement peser plus d'une tonne. Pour des raisons de traçabilité, un palox contient des pommes de terre d'une même variété, d'un même calibre, provenant d'une même parcelle d'une exploitation et d'une même récolte. Une exploitation ou un centre de triage et de conditionnement contient plusieurs frigos destinés à stocker les palox. Le stockage des palox de pommes de terre dans les frigos est extrêmement concentré. En effet, le volume de frigos n'est pas facilement extensible. Les palox sont empilés verticalement en piles les uns sur les autres, en rangées et en colonnes, depuis le fond du frigo jusqu'à l'entrée, sans espace vide ni place perdue.

Alors que la récolte de pommes de terre a lieu sur une période de durée limitée, de quelques mois tout au plus, pendant laquelle les palox sont placés en frigo pour stockage, les frigos sont vidés progressivement au cours de l'année selon les demandes des clients. Ainsi, les palox peuvent rester stockés jusqu'à un an en frigo. De plus, le déstockage se fait de manière précise, le client demandant typiquement une variété et un calibre donné d'un volume donné de pommes de terre. Pour satisfaire cette demande, il importe de pouvoir retrouver efficacement l'emplacement de palox de pommes de terre correspondant à la demande, et d'optimiser l'accès à ceux-ci, par déplacement temporaire de palox situés sur le chemin d'accès. Par conséquent, au cours de l'année, les palox non-demandés sont continuellement déplacés afin d'accéder à ceux demandés. Par conséquent, il existe parfois un risque de perte, ce qui a d'importantes conséquences financières.

Bien que de nombreux entrepôts robotisés aient été proposés, comme discuté ci-dessus, ces solutions ne sont pas adaptées à l'amélioration de centres de triage et de conditionnement existants. En effet, stocker en pile des produits d'une tonne pendant des périodes allant jusqu'à un an, avec la nécessité de déplacer temporairement certains produits pour accéder à d'autres, nécessite des solutions robustes, et de complexifier au minimum les procédures de travail existantes et validées.

La problématique, présentée ci-dessus dans le domaine de la pomme de terre, peut également se retrouver pour d'autres types de produits empilés.

### RESUME DE L'INVENTION

Ainsi, l'invention se rapporte à un système pour la gestion de stocks de produits en pile dans une zone comprenant plusieurs emplacements.

Le système comprend une pluralité d'étiquettes d'identification, adaptées pour équiper, chacune respectivement, un des produits, et stockant chacune respectivement un identifiant.

Le système comprend également au moins un boîtier électronique, adapté pour équiper un chariot élévateur, le boîtier électronique comprenant au moins un système de lecture adapté pour détecter à proximité la présence d'une étiquette d'identification, et pour lire une étiquette d'identification proche.

Le système comprend au moins un système opérateur, adapté pour équiper le chariot élévateur, le système opérateur comprenant un module de communication adapté pour communiquer avec le boîtier électronique et avec un serveur distant.

Le système comprend ledit serveur distant, comprenant un module de communication adapté pour communiquer avec le système opérateur, ledit serveur distant comprenant une mémoire stockant une cartographie tridimensionnelle des produits dans la zone, la cartographie tridimensionnelle comprenant, pour chaque emplacement occupé par un produit, au moins un identifiant associé au produit et des coordonnées tridimensionnelles associées, le serveur distant étant adapté pour recevoir des informations partielles relatives à un emplacement destination de stockage du produit, le serveur distant comprenant un processeur adapté pour déterminer un emplacement destination de stockage d'un produit à stocker à partir au moins des informations partielles et de la cartographie tridimensionnelle, et pour transmettre, via son module de communication, au système opérateur, ledit emplacement destination de stockage.

Grâce à ces dispositions, on poursuit la mise en oeuvre des procédures de travail classiques, qui sont enrichies avec l'utilisation de la donnée de manière à simplifier le travail de l'opérateur.

Par « information partielle de destination », on fait référence à une partie seulement des coordonnées de destination, ce qui exclut le cas où le serveur distant reçoit la totalité des coordonnées de destination.

Selon différents aspects, il est possible de prévoir l'une et/ou l'autre des dispositions ci-dessous.

Selon une réalisation, le système opérateur comprend également une interface opérateur adaptée pour recueillir, de la part de l'opérateur, des informations partielles relatives à l'emplacement destination de stockage du produit.

Selon une réalisation, le système comprend en outre un système de géolocalisation des produits adapté pour communiquer au serveur distant des informations partielles relatives à l'emplacement destination de stockage du produit.

Selon une réalisation, le système opérateur est adapté pour recevoir une information de hauteur relative à la hauteur d'élévation d'un système de portage du chariot élévateur.

Selon une réalisation, le serveur distant est adapté pour mémoriser, à la perte d'un signal du système de lecture, les coordonnées tridimensionnelles du produit porté par le chariot élévateur avant la perte du signal.

Selon une réalisation, le processeur est adapté pour déterminer comme emplacement destination de stockage, un emplacement comprenant des coordonnées tridimensionnelles dont :
- la rangée est déterminée à partir des informations partielles,
- la pile est déterminée comme la pile non-complète de ladite rangée, qui est la plus éloignée d'une entrée, à partir de la cartographie tridimensionnelle,
- la hauteur est déterminée comme étant l'emplacement disponible le plus bas de ladite pile, à partir de la cartographie tridimensionnelle.

Selon une réalisation, le système comprend au moins un relais de communication dans la zone, et adapter pour transmettre des communications entre le système opérateur et le serveur distant.

Selon une réalisation, la zone comprend une pluralité de sous-zones de stockage chacune accessible par l'intermédiaire d'une entrée, le système comprenant en outre au moins un récepteur de sous-zone par sous-zone, relié au serveur distant, le récepteur de sous-zone étant adapté pour détecter le chariot.

Selon une réalisation, le boîtier électronique comprend un système de maintien amovible sur chariot élévateur.

Selon une réalisation, le système comprend plusieurs boîtiers électroniques, chacun destiné à un chariot élévateur, les boîtiers électroniques présentant une base identique et un organe d'adaptation à différents types de chariots élévateurs.

Selon une réalisation, le système de lecture du boîtier électronique est un système de lecture inférieur, et dans lequel le boîtier électronique comprend en outre au moins un système de lecture supérieur adapté pour détecter à proximité la présence d'une étiquette d'identification supérieure, et pour lire une étiquette d'identification supérieure, le processeur du serveur distant étant adapté pour déterminer un emplacement de stockage de produits empilés à stocker.

Selon une réalisation, le produit comprend un contenant et un contenu amovible par rapport au contenant, et la mémoire stocke des caractéristiques du contenant et des caractéristiques du contenu.

Selon une réalisation, la mémoire stocke en outre des conditions environnementales associées au produit indépendamment de l'emplacement du produit.

Selon une réalisation, des informations partielles relatives à un emplacement destination de stockage du produit comprennent l'un et/ou l'autre de :
- une sous-zone du centre de triage et de conditionnement, déterminée à partir d'une détection de proximité d'un chariot élévateur associé au produit,
- une rangée, déterminée par saisie manuelle d'un opérateur sur une interface du système opérateur,
- une rangée, déterminée par un système de géolocalisation (44) des produits.

Selon un autre aspect, l'invention se rapporte à un procédé pour la gestion de stocks de produits en pile dans une zone comprenant plusieurs emplacements, et comprenant une pluralité d'étiquettes d'identification, adaptées pour équiper, chacune respectivement, un des produits (100), et stockant chacune respectivement un identifiant.

Au moins un système de lecture d'au moins un boîtier électronique équipant un chariot élévateur détecte à proximité la présence d'une étiquette d'identification d'une pluralité d'étiquettes d'identification équipant chacune respectivement un des produits et stockant chacune respectivement un identifiant, et lit une étiquette d'identification proche.

Un serveur distant reçoit des informations partielles relatives à un emplacement destination de stockage du produit, un processeur du serveur distant détermine un emplacement de stockage d'un produit à stocker à partir au moins des informations partielles et d'une cartographie tridimensionnelle des produits dans la zone comprenant, pour chaque emplacement occupé par un produit, au moins un identifiant associé au produit et des coordonnées tridimensionnelles associées, le serveur distant transmet, via un module de communication, à un système opérateur, comprenant un module de communication adapté pour communiquer avec le boîtier électronique et avec le serveur distant, ledit emplacement.

Selon un autre aspect, l'invention se rapporte à un programme d'ordinateur comprenant des instructions qui, lorsque le programme est exécuté par un ordinateur, conduisent celui-ci à mettre en oeuvre le procédé ci-dessus.

### BREVE DESCRIPTION DES DESSINS

Des modes de réalisation de l'invention seront décrits ci-dessous par référence aux dessins, décrits brièvement ci-dessous :
[Fig. 1a] représente schématiquement en vue de dessus un centre de triage et de conditionnement 1.
[Fig. 1b] est une vue schématique en perspective d'une station de stockage et de conditionnement.
[Fig. 2] représente schématiquement en perspective un chariot élévateur portant deux palox.
[Fig. 3a] représente schématiquement une étiquette d'identification selon un exemple de réalisation.
[Fig. 3b] est un schéma fonctionnel simplifié de l'étiquette d'identification de la figure 3a.
[Fig. 4] représente schématiquement un chariot élévateur selon un mode de réalisation, susceptible d'être équipé de divers composants.
[Fig. 5] est une vue schématique en perspective d'un boîtier équipant un chariot élévateur selon un mode de réalisation.
[Fig. 6] est une vue schématique de principe d'un système opérateur.
[Fig. 7] est une vue schématique d'un système de géolocalisation des chariots élévateurs.
[Fig. 8] est une vue schématique d'un système de géolocalisation des palox.
[Fig. 9] est une vue schématique d'une gamme de boîtiers électroniques.
[Fig. 10a] est une vue d'une zone de stockage dans un premier mode de réalisation.
[Fig. 10b] est une vue superposée à la figure 10a d'un écran de système opérateur dans un premier mode de réalisation.
[Fig. 11a] est une vue similaire à la figure 10a dans un autre mode de réalisation.
[Fig. 11b] est une vue similaire à la figure 10b dans un autre mode de réalisation.

Sur les dessins, des références identiques désignent des objets identiques ou similaires.

### DESCRIPTION DETAILLEE

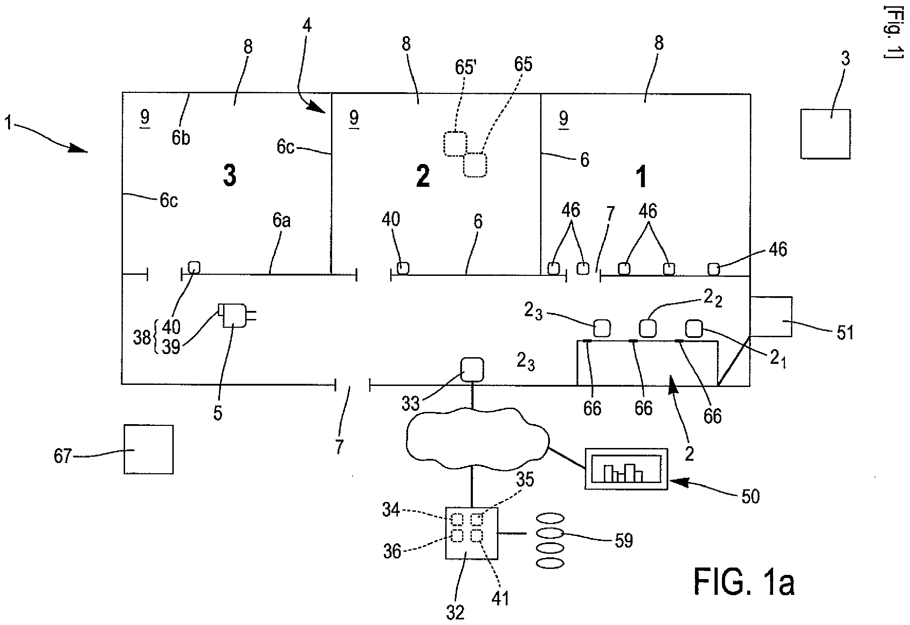

La figure 1a représente schématiquement un centre de triage et de conditionnement 1. Dans l'exemple présenté, il s'agit d'un centre de triage et de conditionnement de pommes de terre, toutefois, d'autres applications sont envisageables. Le centre de triage et de conditionnement 1 représente une zone dans laquelle est mis en oeuvre un mode de réalisation de l'invention. En particulier, une telle zone peut comporter plusieurs stations :
- Une station de calibrage 2,
- Une station de stockage de palox 3,
- Une station de stockage et de conditionnement 4,
- Une station de vidage 67.

En ce qui concerne la station de calibrage 2, elle est raccordée, en entrée, à une station d'entrée 51 recevant des pommes de terre en vrac, et comprend une pluralité de sorties 2₁, 2₂, 2₃, correspondant chacune à un calibre donné de pommes de terre.

En ce qui concerne la station de vidage 67, c'est un emplacement où les palox sont vidés, leur contenu étant transféré dans un autre récipient en vue, par exemple, d'être acheminés hors du centre de triage et de conditionnement 1. On peut y prévoir un vidage complet ou partiel du palox.

Le cas échéant, une ou plusieurs stations disposent chacune d'une balise 66 comprenant un identifiant. Notamment, dans le cas de la station de calibrage 2 comprenant plusieurs sorties, celles-ci peuvent comporter chacune une balise 66 associée.

Le centre de triage et de conditionnement 1 comprend un sol carrossable adapté pour qu'un ou plusieurs chariots élévateurs 5 se déplacent entre les diverses stations 2-4. Dans le cadre de l'invention, on peut utiliser différents types de chariots existants, conformes à la réglementation en vigueur. Les chariots seront décrits plus en détail plus loin.

Les différentes stations du centre de triage et de conditionnement 1 peuvent être délimitées par des murs 6, des portes 7 permettant aux chariots élévateurs 5 de passer d'une station à une autre.

La station de stockage et de conditionnement 4 proprement dite peut elle-même être configurée en plusieurs frigos 8 indépendants, chacun délimité par un mur d'enceinte 6, et accessible par une porte 7. Chaque frigo 8 correspond à une sous-zone 9 de la station de stockage et de conditionnement 4. Toutefois, en toute hypothèse, l'invention trouverait son application en cas de frigo unique.

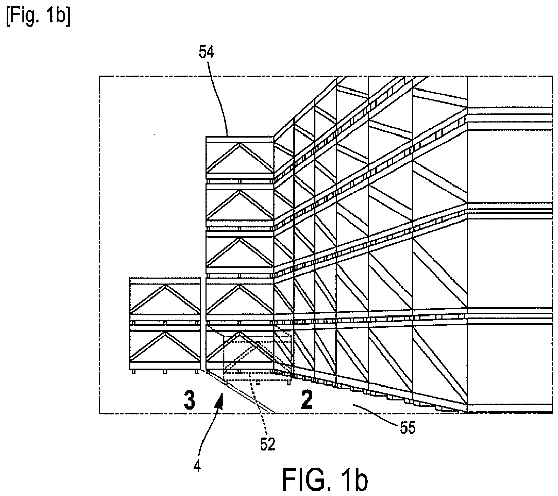

La figure 1b représente schématiquement une station de stockage et de conditionnement 4. Il s'agit d'une pièce de section rectangulaire, de hauteur éventuellement variable, dotée d'une porte 7 unique disposée sur une paroi appelée « paroi d'entrée » 6a. Le « fond » 6b de la pièce est la paroi opposée à la paroi d'entrée. Deux parois latérales 6c s'étendent entre la paroi d'entrée 6a et le fond 6b. La pièce peut être virtuellement découpée en une pluralité d'emplacements 52 chacun de forme parallélépipédique correspondant approximativement à la forme d'un palox, moyennant un espace libre de sécurité l'entourant. Une « rangée » 55 est définie comme un ensemble d'emplacements situés dans un même plan perpendiculaire à la paroi d'entrée et au fond. Un ensemble d'emplacements superposés verticalement d'une même rangée correspond à une « pile » 54. Ainsi, une « rangée » 55 est formée d'une pluralité de « piles » 54. Sur la figure 1b, les rangées 55 sont matérialisées au sol. De plus, les rangées 55 peuvent être affectées d'un identifiant. Par exemple, les rangées 55 non complètes sur la figure 1b sont affectées des identifiants « 2 » (à droite ») et « 3 » (à gauche). Les identifiants sont par exemple matérialisés au sol et/ou au mur.

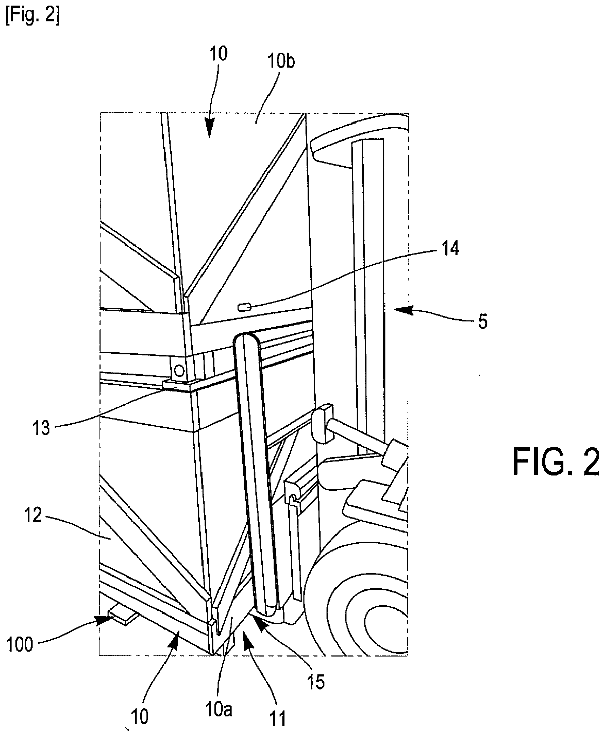

La figure 2 représente schématiquement une partie d'un chariot élévateur 5 portant un palox 10. Plus précisément, sur la figure 2, on distingue un palox inférieur 10a et un palox supérieur 10b. Un palox comprend une palette 11 et une cuve 12 au-dessus de la palette 11. La palette 11 forme un pied 13 pour le positionnement de la palette sur le sol. La palette 11 comporte des ouvertures 15 pour le passage de fourches d'un chariot élévateur sous la cuve 12. La cuve 12 est adaptée pour recevoir des pommes de terre en vrac. Le palox 10 est rigide pour contenir jusqu'à 1 à 2,5 tonnes de pommes de terre. Les palox 10 peuvent de plus être empilés, comme représenté sur la figure 2. Dans ce cas, le pied 13 du palox supérieur 10b repose sur le dessus du palox inférieur 10a. Le palox 10 est suffisamment rigide pour supporter le poids de jusqu'à cinq palox pleins empilés au-dessus. Les palox sont par exemple réalisés par assemblage de composants en bois. Toutefois, d'autres réalisations sont envisageables.

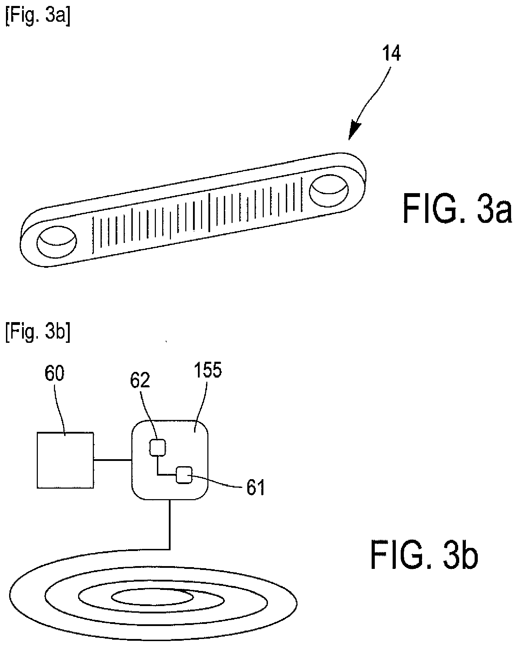

Selon un mode de réalisation de l'invention, on prévoit une étiquette d'identification 14 associée à chaque palox. Une étiquette d'identification 14 est visible sur la figure 2. La figure 3a présente une vue agrandie de la figure 2. Selon ce mode de réalisation, l'étiquette d'identification 14 est un dispositif distinct assemblé au palox par fixation. La fixation de l'étiquette d'identification 14 au palox 10 se fait en un emplacement approprié, permettant à l'étiquette d'identification 14 d'être en regard du lecteur porté par le chariot élévateur quand les fourches du chariot élévateur sont en position sous la cuve, comme cela sera expliqué plus en détail ci-après. Pour fixer les idées, l'étiquette d'identification 14 est par exemple fixée en bas au centre d'une face du palox 10 munie d'ouvertures 15, par exemple à quelques centimètres du bas de la cuve. La fixation au centre permet d'assurer une reconnaissance et une lecture de l'étiquette même pour des palox symétriques de largeurs différentes. La fixation en bas est particulièrement adaptée au cas où les palox sont transportés par deux empilés, comme cela sera décrit plus loin. On prévoit une unique étiquette d'identification par palox. En variante, on pourrait prévoir deux étiquettes identiques par palox, sur deux faces opposées adaptées pour faire face au chariot élévateur lors d'un transport. L'étiquette d'identification 14 est par exemple un objet rigide, fixé au palox 10 par vissage. On choisit de préférence une fixation pouvant vivre la durée de vie du palox, à savoir jusqu'à une vingtaine d'années. On prévoit par exemple un vissage ou un agrafage. L'étiquette d'identification 14 comme la fixation doivent supporter les conditions de vie du palox 10, notamment le nettoyage à haute pression, la poussière, l'humidité du bois voisin, le stockage à l'extérieur, les intempéries, ... Comme représenté sur la figure 3b, l'étiquette d'identification 14 comprend une puce 155 stockant en mémoire un identifiant, et une antenne 56 adaptée pour communiquer à un lecteur extérieur l'identifiant en question en cas de lecture. De plus (cf Fig. 3a), l'étiquette d'identification 14 peut porter, sur une surface extérieure, une information d'identification, utilisable en complément ou en substitution de l'identifiant stocké en mémoire (par exemple, par lecture optique ou humaine). En variante, l'étiquette porte trois informations d'identification : un identifiant stocké en mémoire dans la puce, et lisible par radio, un identifiant lisible optiquement (code-barre ou QR-code) et un identifiant lisible par un humain (une suite de caractères).

Le palox 10 est susceptible d'être soit vide, soit empli d'une certaine quantité de pommes de terre. On désigne ici par « produit » 100 l'ensemble du contenant (palox) et du contenu (pommes de terre), sachant que le contenant peut, le cas échéant, être parfois vide.

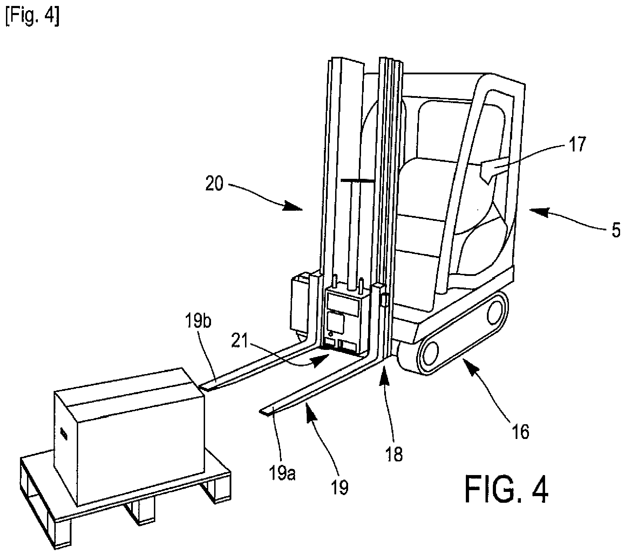

La figure 4 représente plus schématiquement un chariot élévateur 5 susceptible d'être utilisé dans le cadre de l'invention. Le chariot élévateur 5 comporte une base roulante 16, et un poste de conduite 17 où peut prendre place un opérateur (cariste) pour conduire le chariot élévateur 15. Le chariot élévateur 5 comporte de plus un système de portage 18 adapté pour porter des palox 10. Le système de portage 18 comprend par exemple une fourche 19 horizontale pouvant s'insérer dans les ouvertures 15 d'un palox 10, et un système d'élévation 20 permettant d'élever la fourche 19 portant le palox 10. Le système de portage 18 est suffisamment robuste pour supporter au moins un palox plein. Selon les types de chariots élévateurs, certains sont en mesure de supporter au moins deux palox pleins empilés.

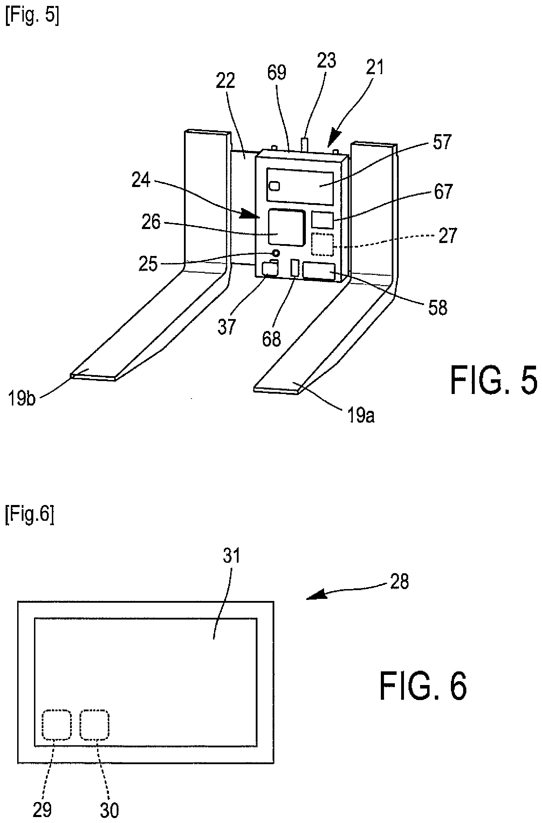

Selon un mode de réalisation de l'invention, on prévoit un boîtier électronique 21 équipant le chariot élévateur 5. Un exemple de mode de réalisation sera présenté ci-dessous en relation avec la figure 5. Le boîtier électronique est monté de manière à ne pas gêner l'utilisation traditionnelle du chariot élévateur 5. Il est fixé, par exemple de manière amovible, au chariot élévateur 5 par l'intermédiaire d'un système de maintien amovible 69. Il est fixé par exemple au niveau de la face avant du système d'élévation 20. Il est plat, de manière à pouvoir être fixé entre deux dents 19a, 19b parallèles de la fourche 19, sans déborder dans l'espace de portage. Si le système de portage 18 comprend un tablier 22 solidaire de la fourche 19, et s'étendant entre deux dents 19a, 19b de celle-ci, le boîtier électronique 21 peut être fixé au tablier 22. On peut par exemple envisager une fixation par clipsage. De plus, on peut prévoir un mécanisme de serrage 23 pour ajuster, par exemple par vissage, la fixation du boîtier électronique 21 clipsé au tablier. Le mécanisme de serrage 23 permet de s'adapter à différentes tailles de tablier 22.

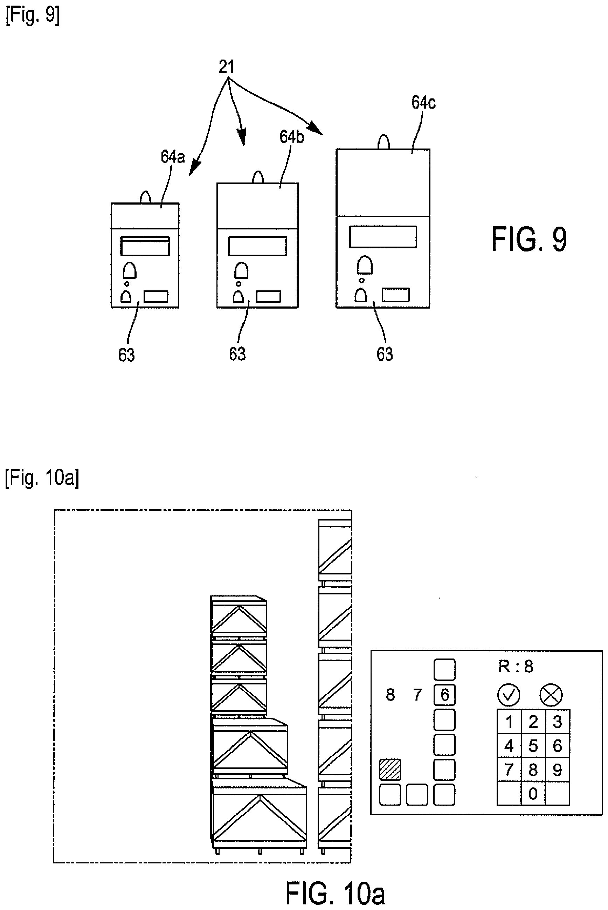

De plus, comme visible sur la figure 9, on peut prévoir une gamme de boîtiers électroniques disposant tous d'une même base 63 comprenant la portion électronique, et comportant des pièces d'adaptation 64a, 64b, 64c différentes adaptées pour s'adapter à différents types de chariots élévateurs 35.

Comme visible sur la figure 5, le boîtier électronique 21 comprend un processeur 27 adapté pour commander les différents autres composants du boîtier électronique 21. Le boîtier électronique 21 est alimenté en énergie de toute manière appropriée, par exemple en étant raccordé sur le circuit électrique du chariot élévateur 5, et/ou sur batterie. Dans ce dernier cas, on prévoit que la batterie soit disposée dans un emplacement accessible sans démonter le boîtier électronique du chariot, soit pour la recharger, soit pour l'échanger, par exemple par l'intermédiaire d'une trappe 57 disposée en face avant.

Le boîtier électronique 21 comprend un système de lecture 24. Le système de lecture 24 est disposé dans le boîtier électronique 21 de manière à être en regard de l'étiquette d'identification 14 fixée à l'emplacement dédié d'un palox 10 lorsque le chariot élévateur 5 porte le palox 10. Le système de lecture 24 peut proposer deux fonctions distinctes :
- D'une part une reconnaissance de la présence ou non de palox à proximité du système de lecture (fonction de capteur de proximité),
- D'autre part, une lecture de l'identifiant de palox.

Le cas échéant, on a recours à un système unique, qui est un système de lecture de l'identifiant d'une étiquette d'identification 14 fixée à un palox 10 porté par le chariot élévateur 5. Dans ce cas, la lecture réussie d'un identifiant implique la présence reconnue d'un palox à proximité. La non-lecture d'une étiquette d'identification implique l'absence de palox à proximité.

Toutefois, pour fixer les idées, dans l'exemple de réalisation particulier présenté, on a recours à deux systèmes distincts, à savoir, d'une part, un capteur de proximité 25, adapté pour détecter la présence d'un objet à proximité et, d'autre part, un lecteur d'étiquette 26 adapté pour lire l'identifiant stocké dans la mémoire d'une étiquette d'identification 14 en regard.

Le capteur de proximité 25 est par exemple mis en oeuvre selon une technologie acoustique (ultra-sons) ou optique (LIDAR), ou autre.

Pour la lecture d'étiquette, on met par exemple en oeuvre une technologie de type identification radio-fréquence (« RFID »). En cas de défaut de lecture, alors que la proximité d'un objet est détectée, une procédure d'exception pourra être déclenchée. Celle-ci consiste par exemple à alerter l'opérateur (par exemple par l'intermédiaire du système opérateur 28 décrit ci-dessous), que l'étiquette d'identification n'a pas été lue, afin que ce dernier mette en oeuvre une procédure adaptée.

Le boîtier électronique 21 peut comprendre en outre un lecteur de balises 67, associé aux balises 66, et adapté pour lire celles-ci. Ce lecteur de balises 67 est adapté pour détecter l'association du boîtier électronique à une station en particulier du centre de triage et de conditionnement 1.

Le boîtier électronique 21 comprend également un module de communication 58 adapté pour communiquer avec un dispositif électronique distant. Dans le mode de réalisation présenté, le dispositif électronique distant est un système opérateur 28, qui sera décrit plus en détail ci-après, en relation avec la figure 6. Dans ce cas, le système opérateur 28 étant également associé au chariot élévateur 5, la connexion entre le boîtier électronique 21 et le système opérateur 28 peut se faire par voie filaire. Toutefois, le boîtier électronique 21 et/ou le système opérateur 28 étant amovibles du chariot élévateur 5, la communication peut être prévue non-filaire. On prévoit alors une technologie de communication adaptée entre le boîtier électronique 21 et le système opérateur 28, par exemple par ondes radios courte portée (bluetooth).

Le système opérateur 28 est assemblé au chariot élévateur 5. On prévoit par exemple un assemblage amovible approprié. En particulier, le système opérateur 28 est placé dans le poste de conduite 17 du chariot élévateur 5. Comme représenté sur la figure 6, le système opérateur 28 est un système informatisé comprenant un processeur 29 qui gère l'ensemble des autres composants du système. Il comprend également un module de communication 30 adapté pour communiquer avec le module de communication du boîtier électronique 21. Le système opérateur 28 comprend en outre une interface opérateur 31. L'interface opérateur 31 permet un échange d'informations entre le système opérateur 28 et un opérateur. On peut prévoir par exemple un échange bidirectionnel, en ce que l'interface opérateur 31 est adaptée pour communiquer des informations à un opérateur 28 (On peut par exemple prévoir un écran, une restitution sonore, etc...) et en ce que l'interface opérateur 31 est adaptée pour recevoir des informations de l'opérateur 28 (on peut par exemple prévoir une dalle tactile, un micro, ...). A titre d'exemple particulier, le système opérateur 28 comprend un micro-ordinateur portatif, de type tablette ou autre.

Le système opérateur 28 est par exemple adapté pour la saisie de tout ou partie des informations relatives au produit :
- relatives au contenant : qualité du palox, âge, éventuels traitements appliqués au palox, taux de remplissage, emplacement (il peut s'agir notamment d'informations partielles relatives à un emplacement, comme, par exemple, un numéro de rangée), ...
- relatives au contenu : variété, calibre, exploitation, parcelle, lot, informations de qualité, boue, moisissures, fourrière, masse, ...
- des informations en saisie libre.
La fourrière est une zone périphérique du champ, dont les produits issus sont connus pour être de moins bonne qualité. Ainsi, l'information relative à la provenance ou non d'une zone de fourrière, pour les produits contenus dans le palox, peut être renseignée.

Les informations relatives au contenu du palox sont stockées en mémoire associées à l'identifiant du palox. De plus, la mémoire peut aussi contenir, associées à l'identification du palox, des informations relatives au palox lui-même, comme par exemple son âge, ou si celui-ci a subi un traitement chimique (traitement anti-germinatif).

Le module de communication 30 du système opérateur 28 est également adapté pour communiquer avec un serveur distant 32. On prévoit ici une communication sans fil, le cas échéant par l'intermédiaire de relais 33 présents dans le centre de triage et de conditionnement 1.

Comme visible sur la figure 1a, le serveur distant 32 comprend un processeur 34 adapté pour gérer les autres composants du système. Le serveur distant 32 comprend un module de communication 35 adapté pour communiquer avec le module de communication 30 du système opérateur 28. Le serveur distant 32 comprend également une mémoire 36 stockant une cartographie tridimensionnelle des produits dans le centre de triage et de conditionnement 1. La cartographie tridimensionnelle des produits est instantanée. Le processeur 34 est ainsi apte à éditer la cartographie tridimensionnelle des produits en fonction des informations reçues depuis le système opérateur 28. Le serveur distant 32 est également apte à communiquer au système opérateur 28 des informations relatives à la cartographie tridimensionnelle.

Ainsi, la cartographie tridimensionnelle comprend une pluralité d'emplacements correspondant aux emplacements de la station de stockage et de conditionnement 4. Un emplacement de la cartographie tridimensionnelle est défini par sa rangée, sa pile, et son numéro d'ordre dans la pile (en partant du sol). Le nombre maximal d'emplacements dans une pile peut être variable selon les piles. De plus, dans la cartographie tridimensionnelle, un emplacement est soit libre, soit occupé par un palox présentant un identifiant. Le processeur 34 accède également à une base de données 59 associant à un identifiant des informations relatives au palox portant cet identifiant.

Le processeur 34 est adapté pour exécuter des règles définissant un emplacement destination de stockage pour un palox 10 porté par le chariot élévateur 5.

Un exemple de telle règle est donné ci-après :
- Le processeur 34 sélectionne la première sous-zone non complète (par exemple, les sous-zones sont identifiées par des numéros d'ordre, comme visible sur la figure 1a),
- Dans cette sous-zone, le processeur 34 sélectionne la première rangée non complète, en partant d'un mur latéral prédéterminé pour la sous-zone ,
- Pour cette rangée, le processeur 34 sélectionne la première pile non-complète, en partant du fond,
- Pour cette pile (éventuellement encore démunie de palox), le processeur 34 sélectionne l'emplacement disponible le plus bas comme emplacement destination de stockage.

Le cas échéant, on peut prévoir des règles plus complexes, notamment pour s'adapter à des géométries particulières de sous-zones et/ou à des formes particulières de palox. En variante, la règle prend en compte les informations relatives au contenu pour déterminer l'emplacement destination. En particulier, la règle détermine un emplacement destination proche d'un palox contenant des pommes de terre similaires (variété, calibre, ...). En effet, ces palox sont susceptibles d'être déstockés en même temps. Les notions de similarités entre lots de pomme de terre et de distance peuvent être déterminées de diverses façons. En variante, une règle prévoit qu'un palox abimé ne pas peut être placé en bas de pile, voire doit être placé en haut de pile.

Le module de communication 35 du serveur distant 32 est adapté pour communiquer au système opérateur 28 des informations relatives à l'emplacement destination de stockage.

L'interface opérateur 31 du système opérateur 28 est adaptée pour communiquer à l'opérateur des informations relatives à l'emplacement de destination reçues depuis le serveur distant 32. En particulier, le système opérateur 28 peut n'afficher qu'une partie des informations déterminées par le serveur distant, à savoir le numéro de la sous-zone et le numéro de la rangée. En effet, dans une sous-zone donnée, avec un identifiant de rangée donnée, l'opérateur va nécessairement déposer le palox 10 transporté sur la pile non-complète la plus éloignée de l'entrée dans la rangée considérée (car s'il déposait le palox plus près de l'entrée, la pile derrière celui-ci ne serait pas complète), et le plus bas possible (car un palox doit nécessairement être déposé soit sur le sol, soit sur un palox inférieur). Ainsi, le serveur distant peut soit sélectionner une partie seulement des informations relatives à l'emplacement destination pour les envoyer au système opérateur 28, soit le système opérateur 28 lui-même peut sélectionner, parmi les informations relatives à l'emplacement destination, celles qui sont utiles à afficher pour l'opérateur.

Le système opérateur 28 est également adapté pour recevoir une information de hauteur relative à la hauteur d'élévation du système de portage 18 du chariot élévateur 5. Selon un premier mode de réalisation, le boîtier électronique 21 comprend un capteur 37 adapté pour mesurer sa distance au sol. Il s'agit donc d'un capteur pointant vers le sol. On peut par exemple envisager d'équiper le boîtier électronique d'un détecteur optique à technologie LASER (par exemple désigné sous l'acronyme anglais LIDAR pour « *Light Detection And Ranging* ». Selon une variante de réalisation, le système d'élévation 20 du chariot élévateur 5 fournit directement l'information relative à la hauteur du système de portage 18. Dans cet exemple, la motorisation du système d'élévation 20 est instrumentée, ce qui permet d'accéder au système opérateur 28 directement à cette information par une simple connexion. La précision de l'information doit être de l'ordre de la moitié de la hauteur d'un palox, de manière à déterminer à quel niveau, en nombres entiers de palox, le système de portage se situe par rapport au sol.

L'information de hauteur peut être transmise au serveur distant 32. Le serveur distant 32 peut utiliser cette information pour l'établissement de la cartographie et/ou pour gérer des exceptions, comme cela sera décrit par la suite plus en détail dans des cas concrets.

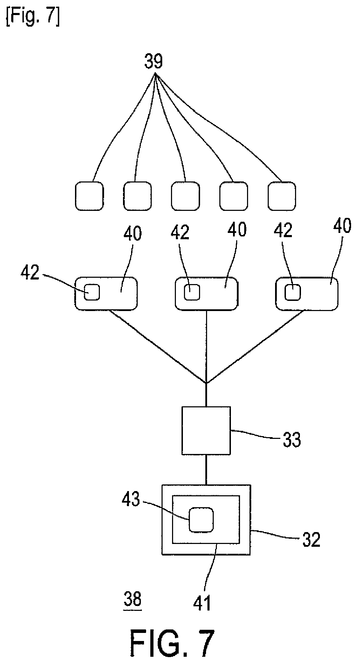

Selon une variante de réalisation, comme représenté sur la figure 7, le système comprend un système de géolocalisation 38 des chariots élévateurs 5. Selon un exemple de réalisation, le système de géolocalisation 38 des chariots élévateurs comprend :
- une pluralité de balises 39, chacune adaptée pour émettre un signal, et chacune adaptée pour être portée par un chariot élévateur 5 (on peut par exemple prévoir que le boîtier électronique 21 ou le système opérateur 28 comporte une telle balise 39),
- une pluralité de récepteurs 40, fixés à demeure dans le centre de triage et de conditionnement chacun en une position prédéterminée, chacun adapté pour détecter un signal émis par une balise 39, chaque récepteur 40 étant connecté à un module de géolocalisation 41.

Le module de géolocalisation 41 est par exemple intégré dans le serveur distant 32. Dans ce cas, la connexion des récepteurs 40 au serveur distant 32 peut également se faire par l'intermédiaire des relais 33.

Le récepteur 40 comprend un processeur 42 adapté pour, à la réception d'un signal émis par une balise 39, communiquer au module de géolocalisation 41 un identifiant associé à la balise 39. Le module de géolocalisation 41 comprend un processeur 43 adapté, à réception de ces informations, pour associer une localisation pré-enregistrée du récepteur 40 avec ledit identifiant, correspondant à un chariot élévateur 5.

Selon un exemple de réalisation, les récepteurs 40 sont disposés en des noeuds du centre de triage et de conditionnement. On peut par exemple disposer un récepteur 40 au niveau de la porte d'entrée d'un frigo.

On choisit une technologie permettant de détecter la proximité de balises correspondant à une entrée/sortie du chariot élévateur 5 de la sous-zone considérée, de manière à évite les faux positifs. Les récepteurs 40 transmettent ainsi au serveur distant 32 une information partielle relative à la localisation du chariot élévateur 5 et, si celui-ci porte un produit, à la localisation du produit actuellement associé au chariot élévateur 5.

Comme représenté sur la figure 1a, le système comprend également un module de consultation 50. Le module de consultation 50 permet d'accéder aux données du serveur distant 32. Il peut par exemple être exécuté par un processeur d'un ordinateur personnel ou d'une tablette raccordé au serveur distant 32. Le module de consultation 50 comprend par exemple un module de consultation de la cartographie permettant de visualiser l'état des stocks, les positions et les mouvements des palox. Il comprend par exemple également un module de recherche permettant de rechercher l'emplacement d'un palox présentant certaines caractéristiques, comme par exemple une variété et/ou un calibre de pomme de terre.

En variante, le système peut en outre comprendre des capteurs de conditions environnementales. On prévoit par exemple des capteurs de température et/ou d'humidité. Les capteurs sont dans un emplacement connu, de sorte que la variable mesurée en cet emplacement est connue. La donnée mesurée est par exemple transmise au serveur distant 32. Par exemple, un capteur est fixé à demeure dans le centre. En variante ou en complément, un capteur est solidaire d'un palox. Ainsi, le serveur distant 32 peut attribuer à un palox des informations supplémentaires, comme des informations mesurées au cours du temps. Un intérêt en est notamment d'associer au palox l'information environnementale à l'emplacement du palox. Ainsi, pour un palox donnée, on obtient un historique de l'information environnementale subie par le palox au cours du temps, indépendamment des déplacements du palox dans le centre de triage et de conditionnement 1.

En mode de consultation, on peut estimer les conditions environnementales d'un palox déterminé, même si celui-ci ne comporte pas de capteurs, à partir des données stockées par un capteur se trouvant de manière contemporaine dans les alentours.

Le système qui vient d'être décrit peut fonctionner comme décrit ci-dessous.

### Installation

Le système qui vient d'être décrit peut équiper un centre de triage et de conditionnement 1. On munit chaque palox 10 d'une étiquette d'identification 14. On munit chaque chariot élévateur 5 d'un boîtier électronique 21 et d'un système opérateur 28. Ainsi, un identifiant est associé à chaque chariot élévateur, et correspond à la fois au boîtier électronique et au système opérateur de celui-ci. On installe les récepteurs 40 aux emplacements adaptés, par exemple à l'entrée de chaque frigo. Si on utilise le système de géolocalisation 44 décrit ci-dessous, on installe les ancres 46 aux emplacements adaptés, par exemple une pour chaque rangée de chaque frigo. On installe le relais 32 et on configure la connexion aux systèmes opérateurs 28, aux récepteurs 40 et aux ancres 46. On installe le serveur 32, et on configure la connexion avec le relais 33. On installe également le module de consultation sur un ordinateur du client, ou sur un ordinateur qu'on lui fournit.

On configure le système. Ceci implique la définition de la cartographie tridimensionnelle vierge du centre de triage et de conditionnement. Pour ce faire, on dessine et on stocke en mémoire la cartographie du centre de triage et de conditionnement 1, intégrant la forme tridimensionnelle des frigos (nombre de rangées, de piles et hauteur de chaque pile). On associe avec chaque récepteur 40 sa position tridimensionnelle. On associe avec chaque ancre 46 sa position tridimensionnelle. Le système est alors fonctionnel.

### Mise en oeuvre pour le stockage

Lors de la mise en oeuvre du système pour le stockage des palox de pommes de terre, à un instant donné, une cartographie tridimensionnelle instantanée est stockée dans la mémoire 36. A chaque emplacement du centre de triage et de conditionnement 1 est associé dans la mémoire 36, soit le fait que l'emplacement est disponible, soit un identifiant de palox occupant l'emplacement (c'est-à-dire l'identifiant d'une étiquette d'identification 14 fixée au palox 10 occupant l'emplacement). La base de données 59 comporte des informations associant l'identification de chaque palox avec les informations relatives à ce palox, aussi bien sur le contenant lui-même (âge, état, traitements, ...) que les produits (variété, calibre, date de stockage, ...) contenus dans le palox.

Pour le stockage, un chariot élévateur 5 ne porte pas de palox. Aussi, le capteur de proximité 25 du boîtier électronique 21 détecte qu'aucun palox n'est porté par le chariot élévateur 5. Le chariot élévateur 5 est conduit jusque dans la station de stockage de palox vides 3. Le chariot élévateur 5 se présente face à un palox 10 vide. Le chariot élévateur a la possibilité de sélectionner n'importe lequel des palox vides 3 accessibles, et ne reçoit pas d'informations d'un serveur central de se présenter face à un palox vide 3 en particulier. Le capteur de proximité 25 détecte la proximité d'un palox. Cette détection déclenche la lecture de l'étiquette d'identification 14 par le lecteur d'étiquette 26 du boîtier électronique 21. Le serveur distant 32 obtient l'information d'identification du palox 10 porté par le chariot élévateur associé à l'identifiant du chariot élévateur. Le serveur distant 32 compare l'information d'identification obtenue avec les informations stockées en mémoire. Cette comparaison doit normalement confirmer que le palox 10 est vide (variable « taux de remplissage » égale à 0). L'information que le palox est vide est transmise au système opérateur 28 du chariot élévateur 5. A défaut, un message d'erreur peut être transmis au système opérateur 28 du chariot élévateur 5 pour inciter l'opérateur à saisir un autre palox. Le serveur distant 32 vérifie également si le palox a, par le passé, été soumis à un traitement. Dans ce cas, ce palox peut n'être pas autorisé à stocker certains types de pommes de terre, et/ou à pénétrer en certains endroits du centre de triage et de conditionnement 1. Dans ce cas, l'information est transmise à l'opérateur par le serveur distant 32. Le cas échéant, si les pommes de terre récemment distribuées en palox ne sont pas compatibles avec ce palox, l'opérateur en est informé, et peut aller poser le palox dans une zone dédiée.

Le serveur distant 32 peut déterminer une destination souhaitable du palox et la transmettre au système opérateur 28. Par exemple, le serveur distant 32 détermine, à partir de règles internes, qu'une prochaine destination souhaitable pour le palox est la station de calibrage 2. Le chariot élévateur 5 est conduit à la station de calibrage 2. Le palox 10 est placé en l'une des sorties 2₁, 2₂, 2₃ pour être rempli de pommes de terre. Le serveur distant 32 peut avoir transmis qu'une prochaine destination souhaitable pour le palox est la station de calibrage 2 en général, ou est une des sorties 2₁, 2₂, 2₃ en particulier. Toutefois, l'opérateur est libre de conduire le chariot élévateur où il le souhaite, indépendamment des informations transmises par le serveur distant 32. L'opérateur saisit, en utilisant le système opérateur 28, la sortie particulière 2₁, 2₂, 2₃ où il se place. L'opérateur saisit, en utilisant le système opérateur 28, des informations relatives aux produits contenus dans le palox 10. La masse est par exemple lue par l'opérateur sur un écran associé à une balance de la station de calibrage 2, et saisie à la main par l'opérateur. Le cas échéant, selon une variante, le système opérateur 28 se connecte automatiquement à la balance de sorte que la donnée de masse soit associée à l'identifiant du palox. Le calibre correspond à la sortie 2₁, 2₂, 2₃ où le palox 10 a été placé. L'opérateur saisit également la variété. Le cas échéant, le serveur distant 32 propose automatiquement à l'opérateur la variété du produit. C'est le cas si, par exemple, peu de temps auparavant, la variété des produits en cours de calibrage a été saisie ou confirmée pour un autre palox. Dans ce cas : l'opérateur transmet, via le système opérateur 28, au serveur distant 32, la sortie 2₁, 2₂, 2₃ à laquelle il se situe ; le serveur distant identifie, dans la mémoire 36, une variété de produits récemment délivrés en palox à la station de calibrage 2, et communique au système opérateur 28 l'information en question ; l'opérateur valide alors, via le système opérateur 28, la variété. Les informations sont transmises au serveur distant 32 qui associe, dans la base de données 59, l'identifiant du palox 10 porté par le chariot élévateur 5 et les informations (variété, calibre, ...) relatives aux produits contenus dans ce palox.

Le cas échéant, si l'opérateur ne valide pas les informations proposées par le serveur distant (par exemple parce qu'on vient de changer l'approvisionnement en produits), le système opérateur 28 propose à l'opérateur de saisir les informations pertinentes.

Le serveur distant 32 détermine un emplacement destination pour le palox 10 plein et pour le chariot élévateur 5 le portant. Cette détermination est faite par exemple en appliquant un ensemble de règles, dont un exemple a été donné ci-dessus, sur la base de la cartographie instantanée. Le cas échéant, comme discuté ci-dessus, si le palox a, antérieurement, subi un traitement, ceci est pris en compte dans la règle. Pour fixer les idées, disons que l'emplacement de destination 65 est déterminé par le serveur distant 32 comme étant dans le frigo « 2 », rangée « 8 » en partant de la droite, pile « 3 » en partant du fond (comme représenté schématiquement figure 1a), hauteur « 2 » en partant du sol (ce qui implique nécessairement qu'un palox a déjà été déposé sur le sol dans cette pile). Cette information est communiquée au système opérateur 28. Ainsi, cet emplacement destination est proposé à l'opérateur. Toutefois, l'emplacement destination proposé n'est pas imposé, le système offrant une liberté à l'opérateur pour saisir le véritable emplacement destination.

Le chariot élévateur est conduit à destination de l'emplacement de destination. Lors de l'entrée du chariot élévateur 5 dans le frigo, le système de géolocalisation 38 des chariots élévateurs 5 confirme que le chariot élévateur 5 se dirige vers le bon frigo. Pour cela, le récepteur 40 à l'entrée du frigo lit la balise 39 portée par le chariot élévateur 5, et communique cette information au serveur distant 32. Celui-ci compare l'information de l'emplacement destination du chariot élévateur 5 déterminé ci-dessus avec l'information déterminée par le récepteur 40. Si les informations ne concordent pas, le serveur distant 32 peut émettre à destination du système opérateur 28 un message d'erreur l'incitant à gagner le frigo de l'emplacement destination. Alternativement, le serveur distant 32 calcule un nouvel emplacement destination pour le palox 10 et le chariot élévateur 5 dans le frigo dans lequel se trouve le chariot élévateur 5 et communique celui-ci au système opérateur 28.

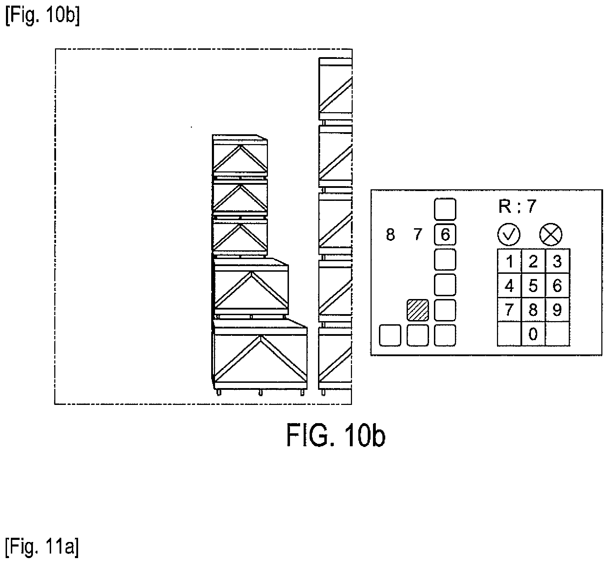

Une fois à l'intérieur du frigo, le système opérateur 28 propose à l'opérateur de saisir une rangée de dépôt éventuellement différente de la rangée prédéterminée par le serveur distant. Ainsi, l'opérateur est à même de saisir des informations partielles relatives à l'emplacement destination de stockage. Typiquement, il s'agira de l'identifiant de la rangée. Une telle saisie est simplifiée, car l'opérateur n'a pas à saisir la totalité des coordonnées tridimensionnelles de l'emplacement destination de stockage. Ainsi, par « partielle », on exclut que l'opérateur saisisse la totalité des informations de localisation de l'emplacement destination. La figure 10a représente, à la fois, sur la gauche, le frigo vu par l'opérateur et, sur la droite, l'écran du système opérateur 28. Celui-ci affiche la cartographie instantanée. Notamment, celui-ci affiche en blanc les palox de la pile la plus proche de l'entrée dans chaque rangée. Le système opérateur 28 affiche en grisé l'emplacement destination proposé. Le numéro de rangée est proposé sur le système opérateur pour validation. Si l'opérateur ne répond pas à cette invitation, le serveur distant conservera la rangée pré-déterminée comme étant la rangée de l'emplacement destination. Si l'opérateur saisit, par exemple au moyen du clavier, une nouvelle rangée, par exemple la rangée « 7 » en partant de la droite, cette information est transmise au serveur distant 32. Le serveur distant 32 détermine alors un nouvel emplacement destination pour le palox 10 et le chariot élévateur 5 à partir de la cartographie tridimensionnelle instantanée et de l'information transmise par l'opérateur. Le serveur distant 32 applique pour cela un ensemble de règles prédéterminées. Par exemple, on peut prévoir une règle selon laquelle le serveur distant détermine, comme emplacement destination, pour la rangée saisie par l'opérateur, la pile entamée la plus proche de la paroi de fond 6b et, comme emplacement dans cette pile, l'emplacement le plus bas. Ainsi, toujours dans l'exemple présenté, on peut prévoir que l'emplacement de destination 65 est déterminé par le serveur distant 32 comme étant dans le frigo « 2 » (imposé par le fait que le système de géolocalisation 38 de chariots 5 transmet l'information que le chariot 5 est dans le frigo « 2 »), rangée « 7 » en partant de la droite (imposé par l'opérateur), pile « 6 » en partant du fond (comme représenté schématiquement par la référence 65' figure 1a), hauteur « 2 » en partant du sol. L'information est proposée à l'opérateur au niveau du système opérateur (figure 10b).

Le chariot élévateur 5 dépose le palox 10 dans le frigo. La perte de signal au niveau du capteur de proximité 25 du boîtier électronique 21 est transmise au serveur distant 32, qui est ainsi informé du dépôt du palox. L'emplacement destination du palox 10, déterminé par le serveur distant 32 tel que décrit ci-dessus, est définitivement associé au palox 10. Le serveur distant 32 peut opérer une vérification du dépôt du palox 10 dans l'emplacement correct. Selon un exemple, l'information de hauteur est utilisée pour cette vérification. L'information de hauteur, à la perte de signal du capteur de proximité, est transmise par le système opérateur 28 au serveur distant 32, qui compare avec la hauteur déterminée pour l'emplacement destination. Aussi, si l'information de hauteur, transmise depuis le chariot 5, correspond à la hauteur prédéterminée pour l'emplacement de destination, l'emplacement destination est définitivement associé au palox 10. Si le serveur distant 32 détecte une erreur entre l'information de hauteur fournie par le système opérateur 28 et la hauteur prédéterminée pour l'emplacement de destination, il peut déclencher une procédure d'erreur. Celle-ci implique par exemple de communiquer une alerte au système opérateur 28 pour informer l'opérateur d'une erreur. Ainsi, l'opérateur pourra remédier à l'erreur par toute action appropriée (par exemple en déplaçant le palox 10 vers l'emplacement correct). Le cas échéant, le processus d'erreur peut entrainer un verrouillage temporaire du système, et une alerte à un utilisateur distant. Le système peut être déverrouillé au bout d'un temps prédéterminé, ou par un personnel disposant des autorisations nécessaires. L'information de hauteur peut aussi être utilisée par le serveur distant 32 pour vérifier si le palox a été déposé en un emplacement autorisé (cas notamment où le palox aurait été déposé trop haut, en un endroit physiquement accessible, mais déconseillé, par exemple pour des raisons de technique du centre (ventilation, ...), ...). Ainsi, même si le serveur distant 32 détermine un emplacement destination a priori pour un palox, le serveur distant 32 procède à une mise à jour de l'emplacement destination au cours du trajet, en fonction des événements détectés ou déclarés au cours du trajet, et un contrôle de ce que la destination réelle correspond à la destination déterminée par le serveur distant 32.

### Consultation

A tout moment, la cartographie instantanée est accessible à un utilisateur par l'intermédiaire du module de consultation 50. Celui-ci permet de visualiser la configuration des stocks, ainsi que des données statistiques sur ceux-ci.

### Mise en oeuvre pour le déstockage

Le système qui vient d'être décrit peut être utilisé pour le déstockage. Selon un exemple particulier, on souhaite déstocker une masse donnée de pommes de terre de variété et de calibre donné. Le module de consultation 50 comprend un module de recherche permettant à l'utilisateur de saisir les informations de recherche. Le module de recherche identifie alors l'emplacement des palox 10 correspondant à la recherche. L'utilisateur peut utiliser la cartographie instantanée pour déterminer, parmi les palox candidats, ceux qui seront les plus faciles d'accès pour un opérateur. L'emplacement d'un palox sélectionné est transmis à un système opérateur 28. Le système opérateur 28 opère alors en mode « destockage ». Dans ce mode, le fonctionnement décrit ci-dessus continue de s'appliquer pour les palox intermédiaire qui sont déplacés en vue d'atteindre le palox cible. De plus, l'emplacement du palox-cible reste affiché en permanence sur l'écran du système opérateur 28. Et, de plus, la règle de détermination de destination des palox intermédiaires prend en compte l'emplacement du palox-cible. Ainsi, la règle exclut de déposer un palox intermédiaire entre l'emplacement où il est pris par le chariot élévateur et l'emplacement du palox-cible.

Grace à ces dispositions, la cartographie tridimensionnelle continue d'être mise à jour pendant le destockage.

Une fois le palox-cible pris par le chariot élévateur, celui-ci est conduit en la station de vidage 67. Lors de l'entrée du chariot élévateur 5 dans la station de vidage 67, le système de géolocalisation 38 des chariots élévateurs 5 confirme que le chariot élévateur 5 est présent dans la station de vidage 67. Pour cela, le récepteur 40 à l'entrée de la station de vidage 67 lit la balise 39 portée par le chariot élévateur 5, et communique cette information au serveur distant 32. Celui-ci met à jour les informations relatives à l'identifiant du palox. Si le vidage est partiel, le taux de remplissage est mis à jour. Un nouvel emplacement destination en frigo est défini et communiqué à l'opérateur. Si le vidage est complet, les informations relatives au contenu sont retirées du système (le cas échéant, elles sont historiquées à fin de traçabilité ultérieure), et le taux de remplissage est passé à 0. Le serveur distant 32 propose à l'opérateur de conduire le palox vide dans la station de stockage de palox 3.

En variante, on n'utilise pas nécessairement un récepteur 40 à l'entrée de la station de vidage 67, mais un inclinomètre 68 solidaire des fourches. Par exemple, l'inclinomètre 68 est inclus dans le boîtier 21. L'inclinomètre 68 détermine un mouvement de rotation des fourches, qui correspond à un vidage d'un palox. Dans ce cas, la station de vidage 67 est en quelque sorte mobile, puisque la station de vidage 67 peut être trouvée en tout endroit où le palox est vidé.

Selon un deuxième mode de réalisation, le système est adapté pour traiter deux palox empilés l'un sur l'autre de manière simultanée. On prévoit alors, par exemple, un boîtier électronique 21 comprenant un système de lecture inférieur tel que décrit ci-dessus, adapté pour lire l'étiquette d'identification 14 d'un palox inférieur 10a, et un système de lecture supérieur adapté pour lire l'étiquette d'identification 14 d'un palox supérieur 10b empilé sur un palox inférieur 10a. Le cas échéant, en variante, on utilise deux boîtiers électroniques 21 superposés. Le fonctionnement reste toutefois similaire à celui décrit ci-dessus dans le cas où les palox sont identifiés un à un. A défaut d'identification par le système de lecture supérieur 10b, le serveur distant 32 considère qu'un seul palox est en cours de traitement, celui détecté par le système de lecture inférieur 10a et, par conséquent, le procédé décrit ci-dessus s'applique directement. Selon ce mode de réalisation, les stations où le chariot-élévateur ne traite nécessairement qu'un seul palox (station de remplissage ou de vidange de palox) comprennent une étiquette d'identification lisible par le système de lecture supérieur lorsque le chariot élévateur est disposé avec le palox en position d'opération dans cette station. Ceci permet d'identifier la présence du chariot-élévateur et du palox en cette station.

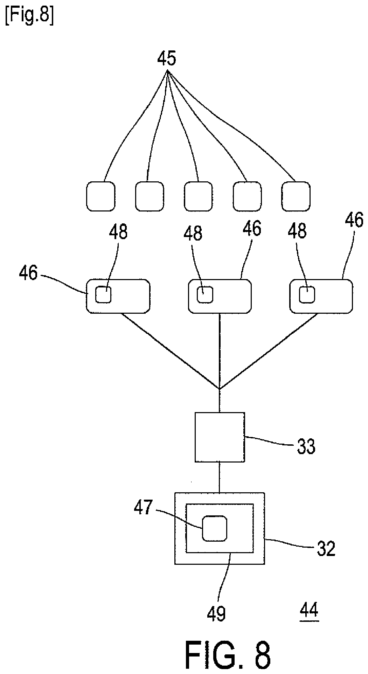

Selon un troisième mode de réalisation, comme représenté sur la figure 8, on utilise un système de géolocalisation 44 des palox. De manière avantageuse, on utilise les étiquettes d'identification 14 comme balises 45 du système de géolocalisation 44 des palox. On utilise de plus des ancres 46 fixées à demeure dans le centre de triage et de conditionnement chacune en une position prédéterminée, chacune adaptée pour détecter un signal émis par une balise 45, chaque ancre 46 étant connectée à un module de géolocalisation 47.

Le module de géolocalisation 47 est par exemple intégré dans le serveur distant 32.

L'ancre 46 comprend un processeur 48 adapté pour, à la réception d'un signal émis par une balise 45, communiquer au module de géolocalisation 47 un identifiant associé à la balise 45. Le module de géolocalisation 47 comprend un processeur 49 adapté, à réception de ces informations, pour associer une localisation pré-enregistrée de l'ancre 46 avec ledit identifiant, correspondant à un palox 10.

Selon un exemple de réalisation, comme représenté sur la figure 1a pour le frigo numéro « 1 », les ancres 46 sont disposées en regard de chaque rangée de piles de palox de chaque frigo du centre de triage et de conditionnement. On peut choisir d'équiper la totalité, ou une partie seulement, des frigos. Le système de géolocalisation 44 ne détermine donc pas à lui seul l'emplacement tridimensionnel du produit, mais une information partielle relative à cet emplacement, notamment, dans l'exemple présenté, la rangée.

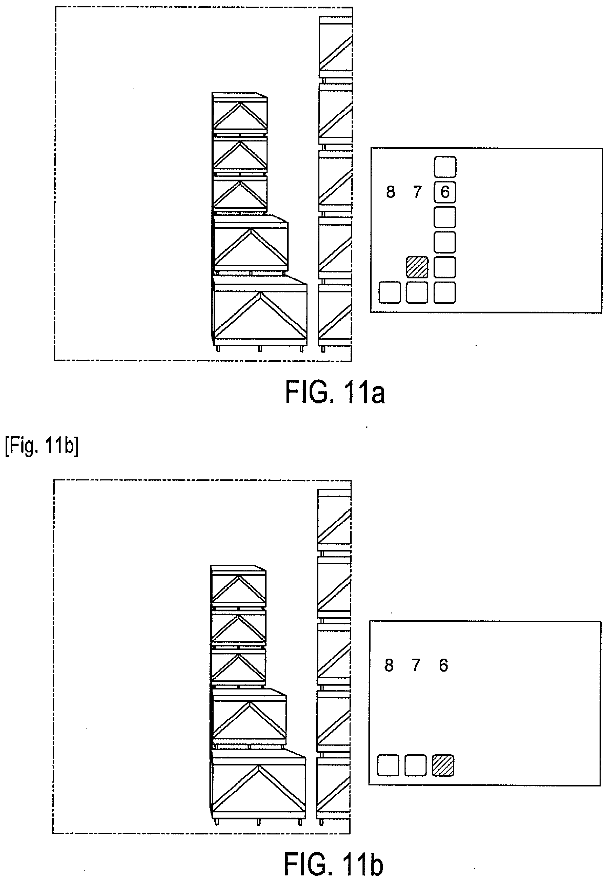

Ainsi, comme représenté sur la figure 11a, si le système de géolocalisation 44 des palox détermine que le palox en cours de stockage se situe dans la rangée « 7 », le serveur distant détermine instantanément l'emplacement destination du palox et communique celui-ci au système opérateur 28. Si, toutefois, l'opérateur poursuit son déplacement de manière à se trouver en face d'une autre rangée, le calcul de l'emplacement destination est mis à jour à partir de la nouvelle localisation déterminée pour le palox. Dans l'exemple de la figure 11b, l'opérateur se situe en face de la rangée « 6 », dont la dernière pile est complète. Le serveur distant 32 détermine donc pour emplacement destination l'emplacement le plus bas devant la pile complète la plus proche de l'entrée.

On choisit une technologie permettant de détecter la position de balises immobiles dans le frigo. On peut par exemple procéder par triangulation si plusieurs ancres reçoivent simultanément un signal provenant d'une même balise 45. La triangulation permet ainsi de déterminer la rangée dans laquelle est déposée le palox. A partir de l'information de rangée, le serveur distant 32 détermine la pile de dépôt comme étant la pile présentant un emplacement vide la plus éloignée de l'entrée du frigo, et la hauteur de l'emplacement destination comme le plus bas de la pile concernée.

Le système de géolocalisation 44 de palox peut être utilisé pour valider la cartographie tridimensionnelle. On prévoit par exemple que chaque étiquette d'identification 14 émette très rarement, par exemple une fois par jour, de manière à consommer peu d'énergie. De plus, on peut prévoir que les étiquettes d'identification 14 émettent à des instants différents, de manière à ce que les ancres reçoivent des signaux simples. Dans ce mode de réalisation, on prévoit que l'étiquette d'identification 14 comprenne une source d'énergie 60 intégrée, ainsi qu'un processeur 61 muni d'une horloge 62, de manière à pouvoir émettre le signal d'identification à un instant pré-déterminé (figure 3b).

Le module de géolocalisation 47 de palox reçoit l'identifiant de l'étiquette d'identification 14 et détermine la position de l'étiquette d'identification à partir des signaux reçus de différentes ancres 46. Le module de géolocalisation 47 de palox compare alors l'information ainsi déterminée avec la cartographie tridimensionnelle.

Le système met également en oeuvre des procédés de rattrapage d'erreur ou de découverte d'un stock. Pour diverses raisons, la base de données 59 peut être incomplète. C'est le cas par exemple en cas d'erreur ponctuelle de saisie, ou d'un dysfonctionnement temporaire du système, et que l'exploitant a décidé de poursuivre le stockage des pommes de terre avec le système hors service. Dans ce cas, la base de données 59 peut être renseignée ultérieurement, par exemple au cours de l'opération de destockage. Si, au cours d'une opération de destockage, le chariot élévateur prend un palox pour lequel les informations saisies en base de données 59 sont incomplètes, les données peuvent alors être complétées automatiquement (identifiant, masse, emplacement, ...) ou manuellement (variété, qualité, ...).

On prévoit un programme d'ordinateur, le cas échéant supporté par un produit programme d'ordinateur, pour la mise en oeuvre de l'un ou l'autre des procédés ci-dessus.

**Références :**

| | | |
|---|---|---|
| centre de triage et de conditionnement 1 | Base roulante 16 | module de communication 35 |
| station de calibrage 2 | Poste de conduite 17 | mémoire 36 |
| station de stockage de palox 3 | Système de portage 18 | capteur 37 |
| station de stockage et de conditionnement 4 | Fourche 19 | système de géolocalisation 38 |
| Chariot élévateur 5 | Dents 19a, 19b | balises 39 |
| Murs 6 | système d'élévation 20 | récepteur 40 |
| paroi d'entrée 6a | boîtier électronique 21 | module de géolocalisation 41 |
| fond 6b | tablier 22 | processeur 42 |
| parois latérales 6c | mécanisme de serrage 23 | processeur 43 |
| Portes 7 | système de lecture 24 | système de géolocalisation 44 |
| Frigos 8 | capteur de proximité 25 | balises 45 |
| Sous-zone 9 | lecteur d'étiquette 26 | ancre 46 |
| Palox 10 | processeur 27 | module de géolocalisation 47 |
| palox inférieur 10a | système opérateur 28 | processeur 48 |
| palox supérieur 10b | processeur 29 | processeur 49 |
| palette 11 | module de communication 30 | module de consultation 50 |
| cuve 12 | interface opérateur 31 | station d'entrée 51 |
| pied 13 | serveur distant 32 | emplacement 52 |
| Etiquette d'identification 14 | relais 33 | |
| Ouvertures 15 | processeur 34 | |
| pile 54 | processeur 61 | inclinomètre 68 |
| rangée 55 | horloge 62 | système de maintien amovible 69 |
| antenne 56 | base 63 | produit 100 |
| trappe 57 | pièces d'adaptation 64a, 64b, 64c | puce 155 |
| module de communication 58 | emplacement destination 65 | |
| base de données 59 | balise 66 | |
| source d'énergie 60 | station de vidage 67 | |

## Revendications

1. Système pour la gestion de stocks de produits en pile dans une zone comprenant plusieurs emplacements, comprenant :
- une pluralité d'étiquettes d'identification (14), adaptées pour équiper, chacune respectivement, un des produits (100), et stockant chacune respectivement un identifiant,
- au moins un boîtier électronique (21), adapté pour équiper un chariot élévateur (5), le boîtier électronique (21) comprenant au moins un système de lecture (24) adapté pour détecter à proximité la présence d'une étiquette d'identification (14), et pour lire une étiquette d'identification (14) proche,
- au moins un système opérateur (28), adapté pour équiper le chariot élévateur (5), le système opérateur (28) comprenant un module de communication (30) adapté pour communiquer avec le boîtier électronique (21) et avec un serveur distant (32),
- ledit serveur distant (32), comprenant un module de communication (35) adapté pour communiquer avec le système opérateur (28), ledit serveur distant (32) comprenant une mémoire (36) stockant une cartographie tridimensionnelle des produits dans la zone, la cartographie tridimensionnelle comprenant, pour chaque emplacement occupé par un produit, au moins un identifiant associé au produit et des coordonnées tridimensionnelles associées, le serveur distant (32) étant adapté pour recevoir des informations partielles relatives à un emplacement destination de stockage du produit, le serveur distant comprenant un processeur (34) adapté pour déterminer un emplacement destination de stockage d'un produit à stocker à partir au moins des informations partielles et de la cartographie tridimensionnelle, et pour transmettre, via son module de communication (35), au système opérateur (28), ledit emplacement destination de stockage.

2. Système selon la revendication 1, dans lequel le système opérateur (28) comprend également une interface opérateur (31) adaptée pour recueillir, de la part de l'opérateur, des informations partielles relatives à l'emplacement destination de stockage du produit.

3. Système selon la revendication 1 ou 2, comprenant en outre un système de géolocalisation (44) des produits adapté pour communiquer au serveur distant des informations partielles relatives à l'emplacement destination de stockage du produit.

4. Système selon l'une quelconque des revendications 1 à 3, dans lequel le système opérateur (28) est adapté pour recevoir une information de hauteur relative à la hauteur d'élévation d'un système de portage (18) du chariot élévateur (5).

5. Système selon l'une des revendications 1 à 4, dans lequel le serveur distant (32) est adapté pour mémoriser, à la perte d'un signal du système de lecture (21), les coordonnées tridimensionnelles du produit porté par le chariot élévateur (5) avant la perte du signal.

6. Système selon l'une des revendications 1 à 5, dans lequel le processeur est adapté pour déterminer comme emplacement destination de stockage, un emplacement comprenant des coordonnées tridimensionnelles dont :
- la rangée est déterminée à partir des informations partielles,
- la pile est déterminée comme la pile non-complète de ladite rangée, qui est la plus éloignée d'une entrée, à partir de la cartographie tridimensionnelle,
- la hauteur est déterminée comme étant l'emplacement disponible le plus bas de ladite pile, à partir de la cartographie tridimensionnelle.

7. Système selon l'une des revendications 1 à 6, dans lequel la zone comprend une pluralité de sous-zones de stockage chacune accessible par l'intermédiaire d'une entrée, le système comprenant en outre au moins un récepteur (40) de sous-zone par sous-zone, relié au serveur distant (32), le récepteur (40) de sous-zone étant adapté pour détecter le chariot (5).

8. Système selon l'une des revendications 1 à 7, dans lequel le boîtier électronique (21) comprend un système de maintien amovible (69) sur chariot élévateur (5).

9. Système selon l'une des revendications 1 à 8, comprenant plusieurs boîtiers électroniques (21), chacun destiné à un chariot élévateur (5), les boîtiers électroniques (21) présentant une base identique et un organe d'adaptation (64a-64c) à différents types de chariots élévateurs (5).

10. Système selon l'une des revendications 1 à 9, dans lequel le système de lecture (24) du boîtier électronique (21) est un système de lecture inférieur, et dans lequel le boîtier électronique (21) comprend en outre au moins un système de lecture supérieur adapté pour détecter à proximité la présence d'une étiquette d'identification supérieure, et pour lire une étiquette d'identification supérieure, le processeur (34) du serveur distant (32) étant adapté pour déterminer un emplacement de stockage de produits empilés à stocker.

11. Système selon l'une des revendications 1 à 10, dans lequel le produit (100) comprend un contenant et un contenu amovible par rapport au contenant, et dans lequel la mémoire (36) stocke des caractéristiques du contenant et des caractéristiques du contenu.

12. Système selon l'une des revendications 1 à 11, dans lequel la mémoire (36) stocke en outre des conditions environnementales associées au produit indépendamment de l'emplacement du produit (100).

13. Système selon l'une des revendications 1 à 12, dans lequel des informations partielles relatives à un emplacement destination de stockage du produit comprennent l'un et/ou l'autre de :
- une sous-zone du centre de triage et de conditionnement, déterminée à partir d'une détection de proximité d'un chariot élévateur (5) associé au produit,
- une rangée, déterminée par saisie manuelle d'un opérateur sur une interface du système opérateur (28),
- une rangée, déterminée par un système de géolocalisation (44) des produits.

14. Procédé pour la gestion de stocks de produits en pile dans une zone comprenant plusieurs emplacements, comprenant :
- une pluralité d'étiquettes d'identification (14), adaptées pour équiper, chacune respectivement, un des produits (100), et stockant chacune respectivement un identifiant,
- au moins un système de lecture (24) d'au moins un boîtier électronique (21) équipant un chariot élévateur (5) détecte à proximité la présence d'une étiquette d'identification d'une pluralité d'étiquettes d'identification équipant chacune respectivement un des produits et stockant chacune respectivement un identifiant, et lit une étiquette d'identification proche,
- un serveur distant (32) reçoit des informations partielles relatives à un emplacement destination de stockage du produit (100), un processeur (34) du serveur distant (32) détermine un emplacement de stockage d'un produit à stocker à partir au moins des informations partielles et d'une cartographie tridimensionnelle des produits dans la zone comprenant, pour chaque emplacement occupé par un produit, au moins un identifiant associé au produit et des coordonnées tridimensionnelles associées, le serveur distant (32) transmet, via un module de communication (35), à un système opérateur (28), comprenant un module de communication (30) adapté pour communiquer avec le boîtier électronique (21) et avec le serveur distant (32), ledit emplacement.

15. Programme d'ordinateur comprenant des instructions qui, lorsque le programme est exécuté par un ordinateur, conduisent celui-ci à mettre en oeuvre le procédé selon la revendication 14.
